# DEMANDE DE BREVET EUROPEEN

(11) **EP 2 025 501 A1**
(43) Date de publication de la demande: **18.02.2009**
(21) Numéro de dépôt: 07290981.5
(22) Date de dépôt: 03.08.2007
(51) Int. Cl.: B29D 30/68, G01B 17/02

(54) **Procédé et dispositif pour déterminer une profondeur de creusage pour pneumatique, procédé et dispositif de creusage associés**

(71) Demandeur: P.S.O. (Pneu Service Outillage), 77140 Nemours (FR)
(72) Inventeur: Pitet, Jean-Paul, 77167 Fay les Nemours (FR)
(74) Mandataire: Pontet, Bernard

(57) **Abrégé**

Le pneumatique comprend une carcasse 13 enrobée d'une gomme 15 formant notamment la bande de roulement. Une sonde 3 détermine l'épaisseur restante de gomme sur la carcasse 13. Des moyens de traitement calculent automatiquement la profondeur optimale P12 de creusage de la bande de roulement. Des moyens d'affichage 8 affichent directement ladite profondeur P12. La même sonde peut avantageusement permettre de mesurer une valeur de sous-creux après recreusage du pneu.

## Description

La présente invention se rapporte à un dispositif particulièrement adapté pour le creusage et plus particulièrement le re-creusage d'une bande de roulement d'un pneumatique usagé, afin d'y reformer des rainures suffisamment profondes. La présente invention porte également sur un procédé pour effectuer un tel creusage.

Les pneumatiques généralement utilisés pour les véhicules, notamment les camions, sont constitués de gomme, généralement du caoutchouc, et renforcés d'une carcasse métallique enrobée par la gomme. La gomme constitue sur une périphérie du pneu une bande de roulement. Cette bande est creusée de rainures permettant l'évacuation des eaux sur une chaussée mouillée. Cette bande de roulement est soumise à une usure qui en diminue l'épaisseur en même temps que la profondeur des rainures. Il est particulièrement économique, notamment pour les pneus de grandes dimensions, de pouvoir prolonger leur durée de vie. Deux solutions existent: le rechapage et le re-creusage.

Le re-creusage consiste à creuser de nouvelles rainures dans la bande de roulement d'un pneu usé, alors que les rainures d'origine sont devenues insuffisantes du fait de l'usure de la bande de roulement. Le re-creusage, permet ainsi de prolonger la durée de vie d'environ 20% à 30%, avant même de prévoir un rechapage.

Une épaisseur de sous-creux minimal, c'est-à-dire une épaisseur de gomme entre le fond d'une nouvelle rainure et la carcasse du pneu doit cependant être conservée pour assurer la protection de la carcasse et la pérennité du pneu. Une valeur minimale de sous-creux généralement admise est comprise entre 2 et 4mm. Il convient donc de s'assurer, avant de régler la profondeur de coupe d'un outil de creusage, que le sous-creux restant après creusage sera suffisant.

On connaît d'après le EP 0 470 785 A2 un dispositif de détermination de l'épaisseur restante au-dessus de la carcasse d'un pneumatique usagé au moyen d'une sonde mécanique en forme d'aiguille qui perce la gomme jusqu'à ce qu'elle rencontre la carcasse.

La sonde est solidaire d'un organe de réglage de l'outil de creusage, de sorte que cet organe de réglage prend une position qui est fonction de la profondeur de pénétration de la sonde.

Ce dispositif est peu commode à utiliser, il met en danger le pneumatique. Une main experte est nécessaire pour faire la mesure sans crever le pneumatique. En pratique, il est préférable de vérifier l'épaisseur restante en plusieurs points de la bande de roulement, mais cela multiplie les difficultés et les risques liés à l'utilisation du dispositif connu.

Le but de l'invention est de proposer un dispositif et un procédé pour déterminer une profondeur de creusage permettant de s'assurer de manière fiable et commode qu'un sous-creux suffisant sera conservé après creusage de la bande de roulement, ainsi qu'un procédé et un dispositif de creusage associés.

Selon un premier objet de l'invention, le dispositif pour déterminer une profondeur de creusage d'une bande de roulement d'un pneumatique, pneumatique comprenant une carcasse enrobée de gomme, la gomme formant notamment la bande de roulement, le dispositif comprenant des moyens pour déterminer une profondeur optimale de creusage de ladite bande de roulement, dans lequel une sonde permet de déterminer une épaisseur restante de la bande de roulement au-dessus de la carcasse, est caractérisé en ce que la sonde mesure de manière non-intrusive ladite épaisseur restante de la bande de roulement au-dessus de la carcasse, et en ce que le dispositif comprend des moyens de traitement pour calculer la profondeur optimale, notamment en fonction de l'épaisseur restante et d'une valeur minimale de sous-creux.

La mesure non-intrusive, c'est-à-dire sans pénétration dans la matière du pneu est facile à réaliser, sans danger pour le pneu, et peut sans inconvénient être réalisée en autant de points de la bande de roulement qu'on le souhaite.

La carcasse étant généralement métallique, le dispositif peut comprendre une sonde à induction électromagnétique, pour mesurer une épaisseur restante de la bande de roulement au-dessus de la carcasse. De préférence, on utilise une sonde acoustique de type échographique, qui s'est avérée fournir des mesures fidèles indépendamment de la constitution de la carcasse. La valeur calculée de la profondeur optimale peut être affichée, et la profondeur de coupe de l'outil être directement réglée par exemple égale ou inférieure à cette valeur optimale.

La sonde peut en outre comprendre un appendice adapté pour pénétrer jusqu'au fond du creux d'une rainure, ledit appendice s'étendant selon le sens de la mesure. Cet appendice est avantageusement sensiblement conique, de sorte qu'il peut s'adapter à différentes sections transversales de rainures. Le dispositif peut ainsi comprendre des moyens pour vérifier la valeur de sous-creux, ce qui permet de mesurer la valeur du sous-creux après creusage et vérifier ainsi que le sous-creux restant est conforme. En particulier, il peut comprendre des moyens d'affichage de la valeur de sous-creux.

Avantageusement, le dispositif comprend un commutateur ayant une première position pour la détermination de la profondeur optimale de creusage et une deuxième position pour la mesure du sous-creux. Chaque position peut correspondre à un calibrage différent de la sonde et un mode de calcul différent de la valeur déterminée ou mesurée.

L'invention vise aussi un dispositif de creusage comprenant un outil de creusage dont la profondeur de coupe est modifiable. Ainsi, le dispositif de détermination et l'outil peuvent être deux parties d'un même dispositif de creusage particulièrement adapté au re-creusage. La sonde et l'outil peuvent ainsi être alimentés par une même source d'énergie.

Selon un deuxième objet de l'invention, un procédé pour déterminer une profondeur de creusage de la bande de roulement d'un pneumatique comprenant une carcasse enrobée de gomme, la gomme formant notamment la bande de roulement, est caractérisé en ce qu'à l'aide d'une sonde on mesure de manière non-intrusive une épaisseur de la bande de roulement au-dessus de la carcasse, et en ce que l'on calcule, en particulier automatiquement, une profondeur optimale de creusage de ladite bande de roulement, notamment en fonction de ladite épaisseur de la bande de roulement. La détermination automatique évite les erreurs de calcul. En effet, il suffit de régler la profondeur de coupe de l'outil de creusage à une valeur égale ou inférieure à celle de la profondeur de creusage optimale telle que déterminée automatiquement selon le procédé.

Un tel procédé utilise avantageusement un dispositif de mesure de l'épaisseur de la bande de roulement qui affiche automatiquement la valeur optimale de creusage.

Le procédé peut en outre comprendre une étape préalable pour fixer une valeur minimale de sous-creux, de sorte que la profondeur optimale de creusage peut ensuite être déterminée automatiquement, notamment en fonction de l'épaisseur de bande de roulement mesurée et de ladite valeur minimale de sous-creux.

De préférence, le procédé comprend aussi une étape pour contrôler le sous-creux après creusage, avec les mêmes moyens, par exemple une même sonde, qui ont permis de déterminer la profondeur optimale de creusage.

L'invention vise aussi un procédé pour creuser la bande de roulement d'un pneumatique caractérisé en ce qu'on détermine une profondeur de creusage optimale avec un procédé selon le premier objet et on creuse la bande de roulement avec un outil produisant un creux ayant une valeur au moins approximativement égale à la profondeur optimale déterminée.

D'autres particularités et avantages de l'invention ressortiront encore de la description ci-après, relative à des exemples non limitatifs.

Aux dessins annexés :
- la figure 1 est une vue schématique d'un dispositif selon l'invention comprenant une sonde en cours d'étalonnage;
- la figure 2 est une vue similaire à celle de la figure 1, dans laquelle on utilise la sonde pour déterminer une profondeur optimale de creusage;
- la figure 3 est une vue similaire à celles des figures 1 et 2, dans laquelle on utilise un outil de creusage; et,
- la figure 4 est une vue similaire à celles des figures 1 à 3, dans laquelle on utilise la sonde pour déterminer une valeur de sous-creux restant.

Les figures représentent un dispositif 1 de creusage, particulièrement destiné au creusage de rainures dans une bande de roulement 10 d'un pneumatique 11 usagé. Le dispositif 1 comprend une unité centrale 2. Il comprend aussi une sonde acoustique 3 et un outil de creusage 4, tous deux reliés à l'unité centrale par un câblage 53,54 respectif approprié.

L'unité centrale comprend des moyens de commande 6,7, de réglage et de traitement 7, d'affichage 8 et d'alimentation (non représentés) pour le dispositif 1.

La sonde 3 comprend un boîtier 31 contenant un capteur acoustique 32. La sonde comprend en outre un appendice 33 s'étendant selon une direction de mesure D3 pour le capteur 32.

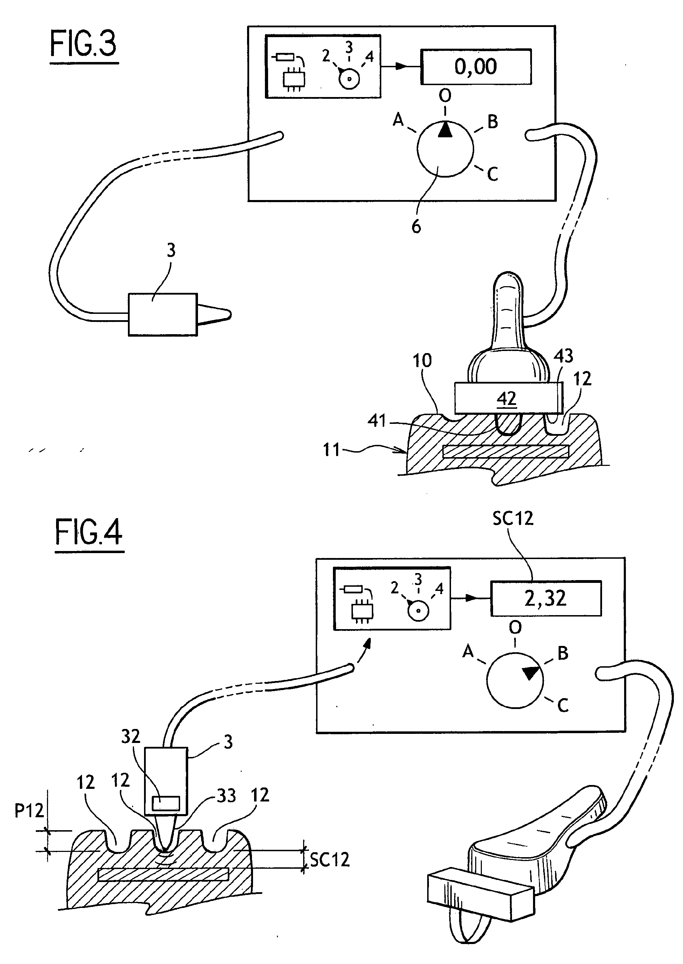

L'outil de coupe 4 comprend une lame chauffante 41 ayant sensiblement une forme de U, permettant de découper une partie de la bande de roulement pour y former une rainure 12 (voir particulièrement la figure 3). La lame 41 est montée sur un porte-lame 42. La lame s'étend au-delà d'une surface d'appui 43 du porte-lame 42. Une hauteur de lame H41, correspondant à une profondeur de coupe pour l'outil 4, est définie par l'étendue de la lame 41 au-delà de la surface d'appui 43.

Certains, parmi les moyens de commande et de réglage pour le dispositif, sont compris dans une carte électronique 7. En particulier, la carte électronique comprend des moyens 71 pour régler une valeur de sous creux SC minimal, c'est-à-dire une épaisseur de gomme que l'on souhaite conserver entre une carcasse 13 du pneu et un fond de rainure 12, après creusage de la rainure. Dans l'exemple illustré, cette valeur de sous-creux SC minimal peut être choisie à l'aide d'un commutateur de réglage 71 parmi trois valeurs, 2mm, 3mm et 4mm. La carte électronique, et donc le commutateur de réglage, est enfermée dans un boîtier 21 de l'unité centrale 2. Ainsi, le commutateur de réglage 71 n'est pas directement accessible à un opérateur chargé du creusage. Le réglage peut ainsi être fait en usine, lors de la fabrication du dispositif, ou par une personne habilitée.

L'unité centrale 2 comprend en outre, parmi les moyens de commande 6,7, un commutateur de sonde 6 accessible en façade de l'unité centrale 2. Le commutateur comprend quatre positions notées 0, A, B et C. Lorsque le commutateur 6 est dans la position 0 la sonde 3 est désactivée. Lorsque le commutateur 6 est dans la position A ou B la sonde 3 est activée et prête à effectuer une mesure. La position C correspond à une position de calibrage pour la sonde 3.

Les moyens d'affichage 8 sont disposés en façade de l'unité centrale. Ils sont constitués d'un afficheur numérique.

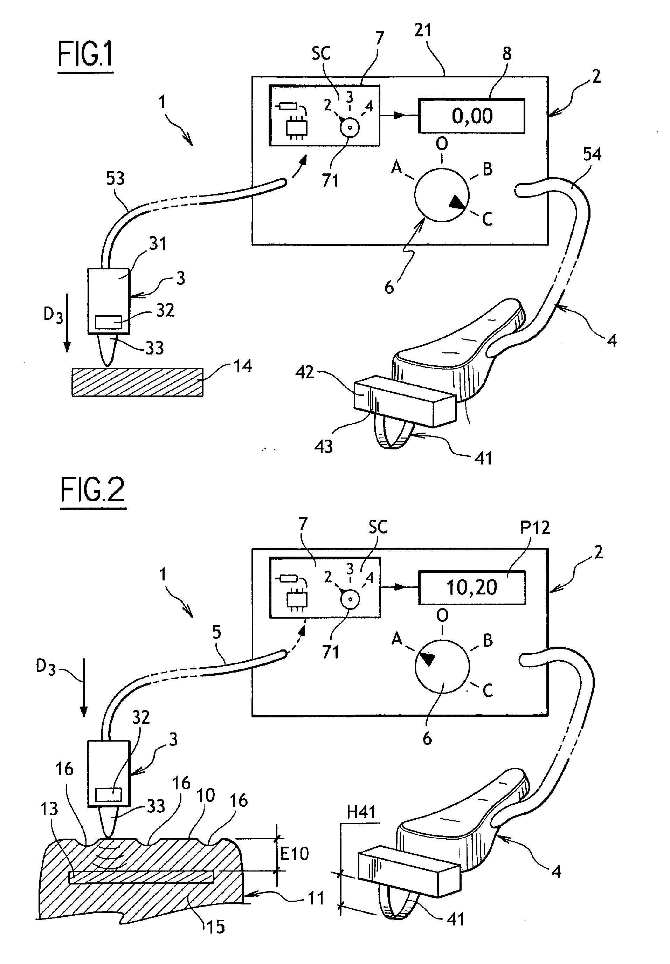

On va maintenant décrire un fonctionnement du dispositif 1 de creusage, et différentes étapes d'un procédé de creusage selon l'invention, en référence aux figures 1 à 4.

La figure 1 représente une étape de calibrage pour la sonde 3. Le commutateur 6 est sur la position C, correspondant à l'étape de calibrage. Une extrémité distale de l'appendice 33 est en contact avec une plaque métallique 15 adaptée ou une partie de carcasse mise à nu, et la direction de mesure D3 est maintenue sensiblement perpendiculaire à la plaque. La valeur [0,00] affichée par l'unité centrale est nulle, c'est à dire que la sonde est correctement calibrée, puisque la distance entre l'extrémité distale de l'appendice et la plaque métallique est effectivement nulle. Des moyens complémentaires de calibrage, non représentés, peuvent permettre de corriger le calibrage au cas où celui-ci ne serait pas correct. Il peut aussi être prévu une autre étape de calibrage dans laquelle l'extrémité de l'appendice est placée à une distance connue de la plaque métallique.

A l'étape illustrée par la figure 2, on prépare le re-creusage d'un pneu usagé 11. Ce pneu 11 comprend une carcasse métallique 13, noyée dans une gomme de caoutchouc 15, la gomme formant une bande de roulement 10 sur une périphérie du pneu 11. Le pneu 11 étant usagé, des rainures d'origine 16 dans la bande de roulement ont dorénavant une profondeur insuffisante pour assurer une utilisation sûre du pneu. Le pneu est tel qu'il reste une épaisseur suffisante E10 de gomme dans la bande de roulement 10 pour y permettre le creusage de nouvelles rainures 12.

Afin de s'assurer qu'une épaisseur de sous-creux suffisante restera après creusage de ces nouvelles rainures, il convient de mesurer l'épaisseur E10 de gomme restante et d'en déduire une profondeur P12 optimale pour les nouvelles rainures 12. Dans ce but, on met le commutateur 6 dans la position A, correspondant à la détermination de ladite profondeur optimale. On note que dans l'exemple illustré, la profondeur de sous-creux SC minimal autorisée a été fixée à 2mm, à l'aide du commutateur de réglage 71.

La sonde est positionnée sur l'extérieur du pneu de sorte que la direction de mesure D3 est sensiblement perpendiculaire à la surface de la bande de roulement 10, l'extrémité distale de l'appendice 33 étant en contact avec la surface extérieure de ladite bande de roulement, sans traverser ni percer celle-ci. Les données émises par le capteur 32 sont transmises via le câblage 53 aux moyens de traitement 7. Les moyens de traitement déterminent alors la valeur de l'épaisseur de gomme restante E10. Dans l'exemple illustré, cette valeur est de 12,20mm. Après déduction de la valeur de sous-creux SC à conserver après creusage, c'est à dire 2mm dans l'exemple, les moyens de traitement transmettent aux moyens d'affichage 8, la valeur P12 de la profondeur optimale de creusage. Dans l'exemple illustré, cette valeur est de 10,20mm, c'est-à-dire 2mm de sous-creux SC ôtés des 12,20mm d'épaisseur de gomme restante E10.

Il est donc possible d'équiper l'outil de creusage 4 avec une lame dont la hauteur H41 est de 10mm. L'affichage direct de la profondeur de creusage optimal P12 permet ainsi d'éviter des erreurs de calcul par l'opérateur chargé du creusage.

La figure 3 représente une étape de creusage. Le commutateur 6 de la sonde 3 est dans la position 0, de sorte que la sonde est désactivée. Une première nouvelle rainure 12 a été creusée et une deuxième est en cours de creusage. La surface d'appui 43 du porte-lame est en appui contre la bande de roulement 10, de sorte qu'elle sert de référence pour le creusage.

La figure 4 illustre une étape de vérification après creusage. Trois nouvelles rainures 12 ont été creusées dans la bande de roulement. Il convient donc de vérifier que la valeur restante SC12 du sous-creux est conforme à celle souhaitée. Le commutateur 6 de la sonde 3 est alors mis dans la position B, correspondant à cette étape de vérification. La forme sensiblement conique de l'appendice 33 est telle qu'il peut pénétrer jusqu'au fond du creux de chaque rainure 12. Il est ici positionné dans une rainure pour y effectuer la mesure du sous-creux restant SC12. Dans la position B du commutateur de la sonde, les moyens de traitement sont configurés de sorte que c'est directement la valeur SC12 de la mesure qui est affichée. Dans l'exemple illustré, cette valeur est de 2,32mm, conforme à la valeur minimale SC. La même mesure peut être répétée à plusieurs endroits dans les nouvelles rainures.

Bien sûr, l'invention n'est pas limitée aux exemples qui viennent d'être décrits et de nombreux aménagements peuvent être apportés à ces exemples sans sortir du cadre de l'invention.

Par exemple le réglage de la valeur de sous-creux peut se faire par voie électronique ou informatique, au lieu de se faire à l'aide d'un commutateur de réglage mécanique. La valeur de sous-creux peut aussi être imposée, et ne pas être réglable, de façon à répondre à des exigences particulières, notamment des normes locales. Il est également possible de prévoir un réglage de sous-creux accessible à l'opérateur chargé du creusage, par exemple en façade de l'unité centrale.

La profondeur optimale peut aussi être déterminée en tenant compte d'une profondeur maximale pour les rainures, notamment si une profondeur trop importante est susceptible de nuire à la bonne tenue du pneu, indépendamment du sous-creux restant.

Il peut aussi être prévu que les moyens de traitement tiennent compte, pour le calcul de la profondeur optimale de creusage, d'une tolérance ou d'une erreur possible lors des opérations de mesure d'épaisseur restante et/ou de creusage, tolérance et erreur qui peuvent être déduites de l'épaisseur mesurée E10 de la bande de roulement, de la même façon que la valeur de sous-creux minimal SC.

En outre les moyens de traitement peuvent aussi tenir compte de hauteurs de lames normalisées, de façon à donner directement, en tant que profondeur de creusage optimale une hauteur de lame donnée parmi des hauteurs de lame disponibles.

Le dispositif de détermination est réalisable en temps qu'appareil non intégré dans un dispositif de creusage.

## Revendications

1. Dispositif (1) pour déterminer une profondeur de creusage d'une bande de roulement (10) d'un pneumatique (11), pneumatique comprenant une carcasse (13) enrobée de gomme (15), la gomme formant notamment la bande de roulement, le dispositif comprenant des moyens pour déterminer une profondeur optimale de creusage de ladite bande de roulement, dans lequel une sonde (3) permet de déterminer une épaisseur restante (E10) de la bande de roulement au-dessus de la carcasse (13), **caractérisé en ce que** la sonde (3) mesure de manière non-intrusive ladite épaisseur restante (E10) de la bande de roulement au-dessus de la carcasse (13), et **en ce que** le dispositif comprend des moyens de traitement (7) pour calculer la profondeur optimale, notamment en fonction de l'épaisseur restante (E10) et d'une valeur minimale de sous-creux (SC).

2. Dispositif selon la revendication 1, **caractérisé en ce qu'**il comprend des moyens (71) pour prérégler une valeur minimale (SC) de sous-creux.

3. Dispositif selon la revendication 1 ou 2, **caractérisé en ce que** la sonde (3) comporte une extrémité distale qui vient en contact avec la bande de roulement du pneu pour la mesure de ladite épaisseur restante (E10).

4. Dispositif selon l'une des revendications 1 à 3, **caractérisé en ce que** la sonde est à induction électromagnétique.

5. Dispositif selon l'une des revendications 1 à 3, **caractérisé en ce que** la sonde est de type acoustique.

6. Dispositif selon l'une des revendications 1 à 5, **caractérisé en ce que** la sonde comprend un appendice (33) adapté pour pénétrer jusqu'au fond d'une rainure, ledit appendice s'étendant selon la direction de la mesure (D3).

7. Dispositif selon la revendication 6, **caractérisé en ce que** l'appendice est sensiblement conique.

8. Dispositif selon la revendication 6 ou 7, **caractérisé en ce qu'**il comprend des moyens (6,7) pour vérifier l'épaisseur de sous-creux restante (SC12) après creusage.

9. Dispositif selon la revendication 8, **caractérisé en ce qu'**il est capable d'afficher l'épaisseur de sous-creux restante après creusage.

10. Dispositif selon l'une des revendications 6 à 9, **caractérisé en ce qu'**il comprend un commutateur (6) ayant une première position (A) pour la détermination de la profondeur optimale de creusage et une deuxième position (B) pour la mesure de l'épaisseur de sous-creux restante.

11. Dispositif selon l'une des revendications 1 à 10, **caractérisé en ce qu'**il est équipé pour afficher la profondeur optimale de creusage calculée.

12. Dispositif pour creuser une bande de roulement (10) d'un pneumatique (11), **caractérisé en ce qu'**il comprend un outil de creusage (A) dont la profondeur de coupe (H41) peut être modifiée, et un dispositif pour déterminer la profondeur optimale de creusage selon l'une des revendications 1 à 11.

13. Procédé pour déterminer une profondeur de creusage de la bande de roulement (10) d'un pneumatique (11) comprenant une carcasse (13) enrobée de gomme (15), la gomme formant notamment la bande de roulement, **caractérisé en ce qu'**à l'aide d'une sonde on mesure de manière non-intrusive une épaisseur (E10) de la bande de roulement au-dessus de la carcasse (13), et **en ce que** l'on calcule, en particulier automatiquement, une profondeur optimale (P12) de creusage de ladite bande de roulement, notamment en fonction de ladite épaisseur de la bande de roulement.

14. Procédé selon la revendication 13, **caractérisé en ce que** l'on fixe au préalable une valeur minimale de sous-creux (SC) et **en ce que** la profondeur optimale de creusage est déterminée automatiquement, notamment en fonction de l'épaisseur de bande de roulement mesurée et de ladite valeur minimale de sous-creux.

15. Procédé selon la revendication 13 ou 14, **caractérisé en ce que** l'on utilise un dispositif de mesure de l'épaisseur de la bande de roulement qui affiche automatiquement la valeur de creusage optimale.

16. Procédé selon l'une des revendications 13 à 15, **caractérisé en ce que** l'on contrôle le sous-creux après creusage, avec une même sonde (3) qui a permis de déterminer la profondeur optimale de creusage.

17. Procédé selon l'une des revendications 13 à 16, **caractérisé en ce que** ladite sonde (3) est de type acoustique.

18. Procédé pour creuser la bande de roulement d'un pneumatique, **caractérisé en ce qu'**on détermine une profondeur de creusage optimale avec un procédé selon l'une des revendications 13 à 17, et on creuse la bande de roulement avec un outil produisant un creux ayant une valeur au moins approximativement égale à la profondeur optimale déterminée.
